# EUROPÄISCHE PATENTSCHRIFT

(11) **EP 0 655 108 B1**
(45) Veröffentlichungstag und Bekanntmachung des Hinweises auf die Patenterteilung: **04.12.1996**
(21) Anmeldenummer: 93912605.8
(22) Anmeldetag: 22.06.1993
(51) Int. Cl.: F16C 39/06, F01D 25/16, F01D 17/14, F01D 17/00, F01D 17/12

(54) **DAMPFTURBINE**
STEAM TURBINE
TURBINE A VAPEUR

(30) Priorität: 18.08.1992 DE 4227280
(43) Veröffentlichungstag der Anmeldung: 31.05.1995
(73) Patentinhaber: SIEMENS AKTIENGESELLSCHAFT, 80333 München (DE)
(72) Erfinder: THIELE, Rudolf, D-8520 Erlangen (DE); PAUL, Bernt-Joachim, D-8520 Erlangen (DE); SPARMANN, Rolf, D-4230 Wesel (DE)
(86) Internationale Anmeldenummer: DE9300538
(87) Internationale Veröffentlichungsnummer: WO9404837

(56) Entgegenhaltungen:
- DE-A- 2 515 315
- DE-A- 3 037 780
- DE-A- 3 700 153
- FR-A- 2 091 672
- US-A- 4 393 658
- REVUE TECHNIQUE SULZER Bd. 59, Nr. 4, 1977, WINTERTHUR CH Seiten 159 - 162 SCANDERBEG 'pilot-operated solenoid valves for nuclear power stations' s
- COMPRESSED AIR Bd. 90, Nr. 4, April 1985, PHILLIPSBURG US Seiten 30 - 33 'suspending rotating shafts in midair' s

## Beschreibung

Die Erfindung bezieht sich auf eine Dampfturbine mit einer mindestens über einen Teil ihrer Länge in einem Gehäuse angeordneten Welle, die auf der Hochdruckseite oder auf der dieser gegenüberliegenden Abdampfseite des Gehäuses durch dieses hindurchgeführt ist, und mit mindestens einem Stellventil zum Einstellen des in das Gehäuse eintretenden Dampfstroms, wie nach der US 4,393,658.

Beim Betrieb einer Dampfturbine werden üblicherweise ölhydraulische Einrichtungen, wie z.B. ölgeschmierte Radial- und Axiallager sowie ölhydraulisch betriebene Stellventile mit zugehöriger Regeleinrichtung eingesetzt. Auch werden sogenannte Schnellschlußventile als schnell wirkende Hauptabsperrorgane und eine zum Drehen des Turbinenläufers vorgesehene Dreheinrichtung ölhydraulisch betrieben. Die Verwendung von Öl in einer Dampfturbine birgt allerdings grundsätzlich eine Brandgefahr in sich. Bislang durchgeführte Versuche mit nicht oder nur schwer brennbaren Flüssigkeiten führten bisher nicht zu einem zufriedenstellenden Ergebnis.

Der Erfindung liegt die Aufgabe zugrunde, eine Dampfturbine der eingangs genannten Art derart weiterzubilden, daß unter Vermeidung der Nachteile des Standes der Technik ein störungsfreier Betrieb möglich ist.

Diese Aufgabe wird erfindungsgemäß gelöst durch eine ölfreie Lagerung der Welle mittels innerhalb des Gehäuses auf der Hochdruckseite und auf der Abdampfseite angeordneten Magnetlagern, sowie durch einen ölfreien Betrieb der Stellventile mittels mindestens eines elektromagnetischen Stellantriebs.

Das auf der Hochdruckseite innerhalb des Gehäuses angeordnete Magnetlager umfaßt vorteilhafterweise ein Radiallager und ein Axiallager. Außerdem ist auf der Hochdruckseite ein Fanglager vorgesehen, das vorzugsweise zwischen dem Radiallager und dem Axiallager angeordnet ist. Das Magnetlager und das Fanglager sind zweckmäßigerweise am Turbinengehäuse angeflanscht und mit einem Deckel dampfdicht verschlossen, so daß auf der Hochdruckseite keine Verbindung des innerhalb des Gehäuses liegenden Dampfraums mit dem Außenraum vorhanden ist. Für den Fall, daß die Welle zum Antreiben einer Arbeitsmaschine, z.B. eines Kompressors oder eines Generators, auf der Hochdruckseite durch das Gehäuse hindurchgeführt ist, ist auf der Abdampfseite ein Deckel vorgesehen. Die Welle ist jedoch zweckmäßigerweise auf der Abdampfseite durch das Gehäuse hindurchgeführt.

Auf der Hochdruckseite ist bei einer Dampfturbine in Überdruckbauweise häufig ein Ausgleichskolben für einen Schubausgleich mit einer sogenannten Labyrinthdichtung als Abdichtung vorgesehen. Das Magnetlager und das Fanglager sind dann zweckmäßigerweise zwischen dem Dampfraum und dieser Abdichtung, d.h. von der Abdampfseite aus gesehen vor dieser Abdichtung, angeordnet. Durch diese Anordnung wird ein besonders geringer Lagerabstand zwischen dem Magnetlager auf der Hochdruckseite und dem auf der Abdampfseite mit dem Vorteil erreicht, daß das schwingungstechnische Verhalten der Welle dem Idealfall der "starren Welle" weiter angenähert ist. Andererseits wird bei Beibehaltung des üblichen Lagerabstands innerhalb des Gehäuses, d.h. im Dampfraum der Turbine, Raum für zusätzliche Schaufelreihen frei. Dadurch wird ein besonders hoher Wirkungsgrad der Dampfturbine erzielt.

Für den Fall, daß die Welle auf der Abdampfseite durch das Turbinengehäuse hindurchgeführt ist, ist zwischen einem dort vorgesehenen Rotor und dem Turbinengehäuse eine Abdichtung erforderlich. Zur Lagerung der Welle auf der Abdampfseite sind dann zweckmäßigerweise ein radiales Magnetlager und ein weiteres Fanglager vorgesehen, die ebenfalls innerhalb des Gehäuses liegen. Die Abdichtung kann in Strömungsrichtung des Dampfes vor, zwischen oder - zur Verkürzung des Lagerabstands - hinter diesen beiden Lagern angeordnet sein. Auch ist es möglich, das axiale Magnetlager auf der Abdampfseite des Gehäuses vorzusehen und dampfseitig davor das Fanglager und das radiale Magnetlager anzuordnen.

Der elektromagnetische Stellantrieb, mit dem die Stellventile zur Einstellung des in das Gehäuse eintretenden Frischdampfes über einen beweglichen Balken gemeinsam betätigt werden können, ersetzt einen üblicherweise zuvor eingesetzten hydraulischen Stellzylinder. Dadurch ist es möglich, den Stellantrieb vorteilhaft innerhalb des Gehäuses anzuordnen. Außerdem kann ein hydraulischer Umformer durch ein elektronisches Leistungsteil ersetzt werden, wobei lediglich elektrische Leitungen durch das Gehäuse zu führen sind. Es kann auch eine der Anzahl der Stellventile entsprechende Anzahl von elektromagnetischen Stellantrieben vorgesehen sein.

Als Stellantriebe werden zweckmäßigerweise elektromagnetische Linearantriebe eingesetzt. Dabei kann jedem Stellventil ein Elektromagnet mit einem Eisenjoch und einer Spule sowie ein mit einer Schubstange verbundener, linear bewegbarer Magnetanker zugeordnet sein. Ein beweglicher Balken, über den alle Stellglieder gleichzeitig betätigbar sind, ist dann nicht erforderlich.

Ausführungsbeispiele der Erfindung werden anhand einer Zeichnung näher erläutert; darin zeigen:
Figur 1 im Querschnitt eine ölfreie Dampfturbine mit Magnetlagern und elektromagnetischem Stellantrieb und
Figuren 2 und 3 weitere Ausführungsformen des elektromagnetischen Stellantriebs.
Einander entsprechende Teile sind in allen Figuren mit den gleichen Bezugszeichen versehen.

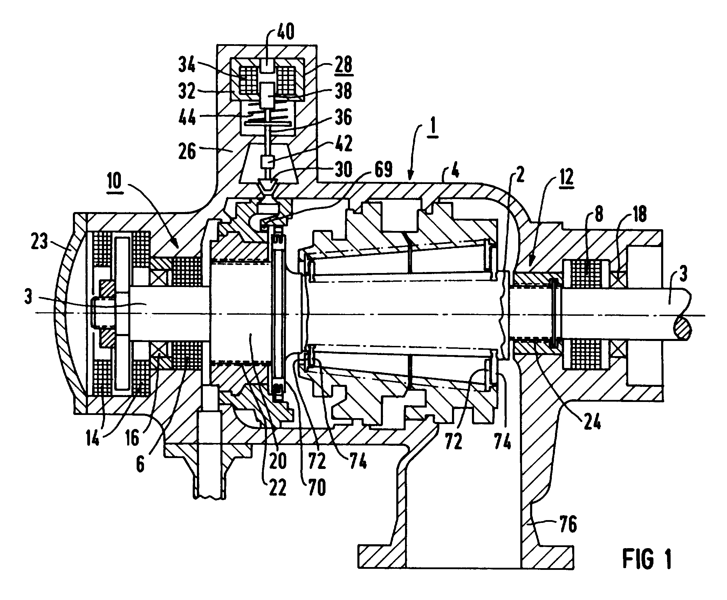

Die in Figur 1 gezeigte Dampfturbine 1 umfaßt einen drehbar gelagerten Turbinenläufer 2 auf einer Welle 3 und ein feststehendes Turbinengehäuse 4. Die Welle 3 ist in zwei radialen Magnetlagern 6 und 8 gelagert, wobei das Magnetlager 6 auf der Hochdruckseite 10 und das Magnetlager 8 auf der Abdampfseite 12 der Dampfturbine 1 angeordnet ist. Bei der Dampfturbine 1 gemäß Figur 1 ist die Welle 3 auf der Abdampfseite 12 durch das Turbinengehäuse 4 hindurchgeführt. Generell kann die Welle 3 aber auch auf der Hochdruckseite 10 durch das Turbinengehäuse 4 hindurchgeführt sein.

Ein im Ausführungsbeispiel auf der Hochdruckseite 10 angeordnetes magnetisches Axiallager 14 hält über die Welle 3 den Turbinenläufer 2 in axialer Richtung und nimmt die vom Dampf erzeugten Schubkräfte auf. Das magnetische Axiallager 14 kann aber auch auf der Abdampfseite 12 angeordnet sein.

Auf der Hochdruckseite 10 ist außerdem ein Fanglager 16 vorgesehen, das im Ausführungsbeispiel zwischen den Magnetlagern 6 und 14 angeordnet ist. Ein weiteres Fanglager 18 ist auf der Abdampfseite 12 in Strömungsrichtung des Dampfes hinter dem radialen Magnetlager 8 angeordnet. Bei einem Ausfall der Magnetlager 6 und 8 kann die Welle 3 in diesen Fanglagern 16 und 18 auslaufen.

Der derzeit verfügbare Spulenwerkstoff für Magnetlager ist für Temperaturen bis etwa 400° C ausgelegt. In der Dampfkammer einer Dampfturbine 1 können aber Temperaturen von bis zu 540° C auftreten. Es kann daher erforderlich sein, die Magnetlager 6, 8 und 14 sowie die Fanglager 16 und 18 zu kühlen. Dazu kann Wasser aus dem Wasser-Dampf-Kreislauf der Dampfturbine 1 entnommen werden. Zusätzliche Aggregate, wie z.B. Pumpen oder Kühler, sind dann nicht erforderlich. Eine Kühlung kann entfallen, wenn ein für derart hohe Temperaturen ausgelegtes Spulenmaterial verwendet wird. Eine hohe Temperaturbeständigkeit kann z.B. durch eine Keramikisolierung der Spulendrähte erreicht werden.

Die Hochdruckseite 10, d.h. das vordere Lagergehäuse, ist mit einem am Gehäuse 4 angebrachten Deckel 23 dampfdicht verschlossen, so daß dort eine Verbindung zum Außenraum nicht vorhanden ist. Ein im Ausführungsbeispiel auf der Hochdruckseite 10 angeordneter Ausgleichskolben 20 mit einer Labyrinthdichtung 22 ist lediglich bei einer Überdruckturbine erforderlich.

Eine auf der Abdampfseite 12 vorgesehene berührungsfreie Wellendichtung oder Abdichtung 24, die in Strömungsrichtung des Dampfes sowohl vor, hinter als auch zwischen den Lagern 8 und 18 angeordnet sein kann, ist allerdings in jedem Fall erforderlich, weil an dieser Austrittsstelle die Welle 3 durch das Gehäuse 4 geführt ist.

Das Gehäuse 4 umschließt somit den Turbinenläufer 2 vollständig und die Welle 3 über einen Teil ihrer Länge. Es umschließt weiterhin die Magnetlager 6, 8, 14, die Fanglager 16, 18 und die Abdichtungen 22, 24. Ein Einströmkasten 26 für den Frischdampf ist Teil des Gehäuses 4. Mindestens ein elektromagnetischer Stellantrieb 28 für eine Anzahl von Stellventilen 30, von denen nur eines sichtbar ist, ist ebenfalls innerhalb des Gehäuses 4 angeordnet.

Der elektromagnetische Stellantrieb 28 umfaßt ein Eisenjoch 32 und eine Spule 34 sowie einen mit einer Schubstange 36 verbundenen beweglichen Magnetanker 38 und einen feststehenden Eisenkern 40. Die Schubstange 36 wirkt auf einen beweglichen Ventilbalken 42. Mittels des Ventilbalkens 42 können mehrere senkrecht zur Zeichenebene hintereinander angeordnete Stellventile 30 gleichzeitig betätigt werden. Eine unterhalb des feststehenden Eisenjochs 32 vorgesehene Schraubenfeder 44 schließt die Stellventile 30, wobei eine während des Betriebs der Dampfturbine 1 auf die Stellventile 30 wirkende Dampfdruckkraft ebenfalls in Schließrichtung wirkt. Die vom elektromagnetischen Stellantrieb 28 aufzubringende Kraft zum Öffnen der Stellventile 30 entspricht daher mindestens der Summe aus der Federkraft der mechanischen Feder 44 und der auf die Stellventile 30 wirkenden Dampfdruckkraft.

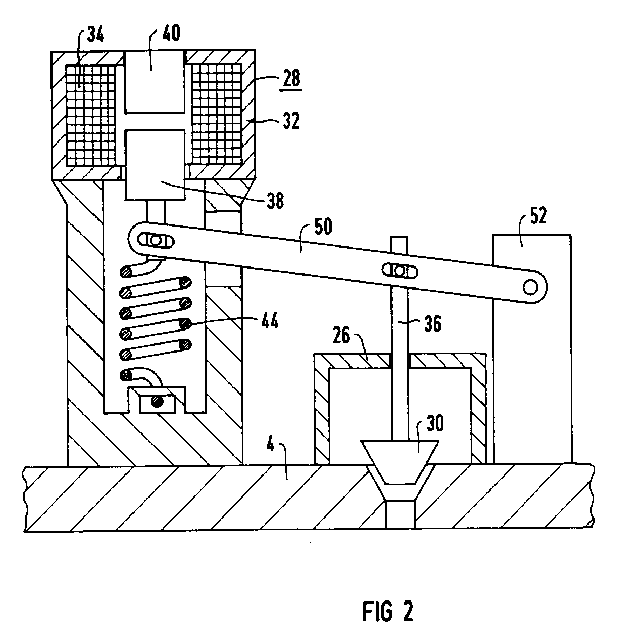

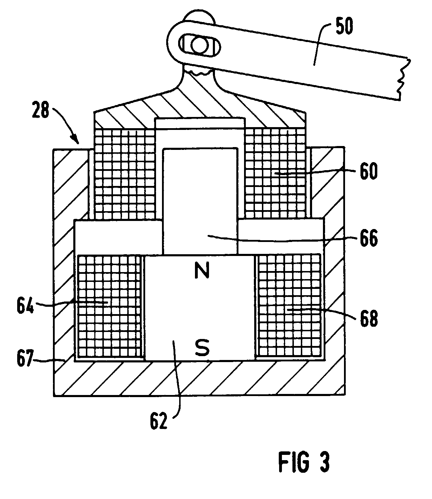

Die Stellventile 30 können über einen einzigen elektromagnetischen Stellantrieb 28, der auf den Ventilbalken 42 wirkt, betätigt werden. Alternativ können sie auch über eine Anzahl von Stellantrieben 28 betätigt werden, wobei dann jedem einzelnen Stellventil 30 ein elektromagnetischer Stellantrieb 28 zugeordnet ist. Weitere mögliche Ausführungen sind in den Figuren 2 und 3 dargestellt.

Gemäß Figur 2 ist ein Stellantrieb 28 neben einem Einströmkasten 26 angeordnet. Hier ist der bewegliche Magnetanker 38 nicht direkt, sondern über einen Hebel 50 mit der Schubstange 36, die wiederum das Stellventil 30 trägt, verbunden. Der Hebel 50 ist außerdem an einem gehäusefesten Tragteil 52 beweglich befestigt.

Die Stellventile 30 werden bei der in den Figuren 1 und 2 dargestellten Anordnung durch die elektromagnetische Kraft des Stellantriebs 28 geöffnet. Der Stellantrieb 28 kann auch mit umgekehrter Kraftrichtung auf die Stellventile 30 angeordnet sein, so daß die elektromagnetische Kraft des Stellantriebs 28 die Stellventile 30 schließt. Dies ist z.B. in einem Schnellschlußfall zweckmäßig. Die Feder 44 muß bei dieser Ausführung eine geringere Kraft in Schließrichtung der Stellventile 30 ausüben.

Eine unmittelbare Übertragung der Bewegung des Magnetankers 38 auf die Schubstange 36 zum Schließen der Stellventile 30 kann mit einer Anordnung erfolgen, bei der die Schubstange 36 durch eine Bohrung im Eisenkern 40 geführt ist und vom Magnetanker 38 in Schließrichtung der Stellventile 30 geschoben wird. Bei dieser Anordnung sind die Positionen des Magnetankers 38 und des durchbohrten Eisenkerns 40 vertauscht.

Der in Figur 3 dargestellte Stellantrieb 28, der ebenfalls neben einem Einströmkasten 26 angeordnet ist, umfaßt eine Spule 60, die in einem im wesentlichen zeitlich konstanten Magnetfeld linear beweglich ist. Die Bewegung der Spule 60 wird mittels des Hebels 50 auf das Stellventil 30 übertragen. Das genannte Magnetfeld wird von einem Permanentmagnet 62, von einem Elektromagnet 64 mit einer Spule 68 oder von einer Kombination aus dem Permanentmagnet 62 und dem Elektromagnet 64 mit der Spule 68 durch Überlagerung der von beiden gebildeten Magnetfelder erzeugt. Der mit einem Eisenkern 66 verbundene Permanentmagnet 62, dessen Magnetpole mit N und S bezeichnet sind, ist innerhalb eines Eisenjochs 67 von der Spule 68 umgeben. Die auf die Spule 60 wirkende elektromagnetische Lorentzkraft ist im wesentlichen dem Strom durch die Spule 60 proportional und von deren Position im Magnetfeld unabhängig.

Der Permanentmagnet 62 kann auch durch einen weichmagnetischen Eisenkern ersetzt werden. Betreibt man dann die Spulen 60 und 68 in Serienschaltung und mit demselben Strom, so ist die Kraft auf die bewegliche Spule 60 dem Quadrat dieses Stroms proportional.

Beim Betrieb der Dampfturbine 1 gemäß Figur 1 gelangt Frischdampf über den Einströmkasten 26 und die Stellventile 30 in den vom Gehäuse 4 umgebenden Dampfraum und trifft über Düsen 69 auf ein Laufrad 70. Von dort strömt der Dampf durch die einzelnen Stufen, die jeweils aus einer Anzahl von feststehenden Leitschaufeln 72 und einer Anzahl von am Läufer 2 befestigten und mit diesem umlaufenden Laufschaufeln 74 aufgebaut sind. Die Turbinenschaufeln 72 und 74 sind von Stufe zu Stufe größer und länger ausgeführt, weil der arbeitleistende Dampf entspannt wird und dabei sein Volumen vergrößert. Der entspannte Dampf durchströmt einen Abdampfstutzen 76 und wird entweder zunächst als Prozeßdampf genutzt oder direkt einem der Dampfturbine nachgeschalteten (nicht dargestellten) Kondensator zugeführt.

Die Stellventile 30 dienen zur Einstellung der Stärke des in das Gehäuse 4 eintretenden Frischdampfstroms, wobei deren Ventilhub durch den Spulenstrom in dem dem jeweiligen Stellventil 30 zugeordneten Stellantrieb 28 gesteuert wird. Die Änderung dieses Stroms wird vorzugsweise durch eine elektronische Steuerung veranlaßt. Die dazu erforderlichen Leitungen sind in nicht näher dargestellter Art und Weise durch das Gehäuse 4 an den Stellantrieb 28 geführt. Für den Betrieb der Stellventile 30 ist vorzugsweise eine PID-Regelung vorgesehen, bei der der Ventilhub und dessen Änderungsgeschwindigkeit die von der Regelung beeinflußten Größen darstellen.

Bei Verwendung eines Schnellschlußventils, das üblicherweise als schnell wirkendes Hauptabsperrorgan eingesetzt wird, wird dieses statt über eine Ölhydraulik zum Vorspannen einer Schnellschlußfeder über einen Elektromagnet oder einen Elektromotor betätigt. Eine Auslösung erfolgt elektromechanisch, wobei eine Feder zum dämpfenden Abfangen des Ventils vor dem Ventilsitz dient. Des weiteren übernimmt ein Elektromotor die Funktion der eingangs erwähnten ölhydraulischen Dreheinrichtung.

Eine derartige ölfreie Dampfturbine und ein von dieser angetriebener, ebenfalls mit Magnetlagern versehener Kompressor können als kompletter Arbeitssatz oder Maschinenstrang Ölfrei betrieben werden. Der Wirkungsgrad eines solchen Maschinenstrangs ist aufgrund der geringen Reibungsverluste und des geringen Energiebedarfs der Magnetlager besonders hoch. Durch die Verwendung der Magnetlager 6, 8, 14 können auch Schwingungen der Welle 3 in besonders günstiger Weise kompensiert werden. Diese Vorteile ergeben sich insbesondere auch dann, wenn zusätzlich der Generator eines Turbosatzes mit Magnetlagern ausgerüstet ist und von der ölfreien Dampfturbine direkt angetrieben wird. Eine Brandgefahr ist damit praktisch ausgeschlossen.

## Patentansprüche

1. Dampfturbine mit einer mindestens über einen Teil ihrer Länge in einem Gehäuse (4) angeordneten Welle (3), die auf der Hochdruckseite (10) oder auf der dieser gegenüberliegenden Abdampfseite (12) des Gehäuses (4) durch dieses hindurchgeführt ist, und mit mindestens einem Stellventil (30) zum Einstellen des in das Gehäuse (4) eintretenden Dampfstroms,
**gekennzeichnet durch** eine ölfreie Lagerung der Welle (3) mittels innerhalb des Gehäuses (4) auf der Hochdruckseite (10) und auf der Abdampfseite (12) angeordneten Magnetlagern, sowie durch einen ölfreien Betrieb des mindestens einen Stellventiles (30) mittels mindestens eines elektromagnetischen Stellantriebs (28).

2. Dampfturbine nach Anspruch 1,
**dadurch gekennzeichnet,** daß das Magnetlager auf der Hochdruckseite (10) ein Radiallager (6) und ein Axiallager (14) umfaßt.

3. Dampfturbine nach Anspruch 2,
**dadurch gekennzeichnet,** daß außer dem Radiallager (6) und dem Axiallager (14) ein, vorzugsweise zwischen diesen beiden angeordnetes, Fanglager (16) vorgesehen ist.

4. Dampfturbine nach einem der Ansprüche 1 bis 3,
**dadurch gekennzeichnet,** daß die Hochdruckseite (10) oder die Abdampfseite (12) mit einem Deckel (23) dampfdicht verschlossen ist.

5. Dampfturbine nach einem der Ansprüche 1 bis 4,
**dadurch gekennzeichnet,** daß auf der Hochdruckseite (10) des Gehäuses (4) eine Abdichtung (22) vorgesehen ist, wobei das radiale - und axiale - Magnetlager von der Abdampfseite (12) aus gesehen vor dieser Abdichtung (22) angeordnet ist.

6. Dampfturbine nach einem der Ansprüche 1 bis 5,
**dadurch gekennzeichnet,** daß auf der Abdampfseite (12) innerhalb des Gehäuses (4) ein weiteres Fanglager (18) vorgesehen ist, wobei eine auf der Abdampfseite (12) vorgesehene weitere Abdichtung (24) in Strömungsrichtung des Dampfes vor oder zwischen, vorzugsweise hinter, dem Magnetlager (8) und dem Fanglager (18) angeordnet ist.

7. Dampfturbine nach einem der Ansprüche 1 bis 6,
**dadurch gekennzeichnet,** daß der elektromagnetische Stellantrieb (28) ebenfalls innerhalb des Gehäuses (4) angeordnet ist.

8. Dampfturbine nach einem der Ansprüche 1 bis 7,
**dadurch gekennzeichnet,** daß der elektromagnetische Stellantrieb (28) ein Eisenjoch (32) und eine Spule (34) sowie einen mit einer Schubstange (36) verbundenen Magnetanker (38) umfaßt.

## Claims

1. Steam turbine having a shaft (3) arranged at least over a part of its length in a housing (4), which shaft is guided on the high-pressure side (10) or on the opposite waste-steam side (12) of the housing (4) through the housing (4), and having at least one adjusting valve (30) to adjust the flow of steam entering into the housing (4), characterized by an oil-free bearing of the shaft (3) by means of magnetic bearings arranged within the housing (4) on the high-pressure side (10) and on the waste-steam side (12), and by an oil-free operation of the at least one adjusting valve (30) by means of at least one electromagnetic actuating drive (28).

2. Steam turbine according to claim 1, characterized in that the magnetic bearing on the high-pressure side (10) comprises a radial bearing (6) and an axial bearing (14).

3. Steam turbine according to claim 2, characterized in that apart from the radial bearing (6) and the axial bearing (14) a catch bearing (16) is provided, preferably arranged between these two.

4. Steam turbine according to one of claims 1 to 3, characterized in that the high-pressure side (10) or the waste-steam side (12) is closed in a steam-tight manner by a cover (23).

5. Steam turbine according to one of claims 1 to 4, characterized in that on the high-pressure side (10) of the housing (4) a seal (22) is provided, whereby the radial and axial magnetic bearings are arranged in front of this seal (22) when seen from the waste-steam side (12).

6. Steam turbine according to one of claims 1 to 5, characterized in that on the waste-steam side (12) within the housing (4) an additional catch bearing (18) is provided, whereby an additional seal (24) provided on the waste-steam side (12) is arranged in the direction of the flow of the steam in front of or between, preferably behind, the magnetic bearing (8) and the catch bearing (18).

7. Steam turbine according to one of claims 1 to 6, characterized in that the electromagnetic actuating drive (28) is likewise arranged within the housing (4).

8. Steam turbine according to one of claims 1 to 7, characterized in that the electromagnetic actuating drive (28) comprises an iron yoke (32) and a coil (34) as well as a magnet armature (38) connected to a push rod (36).

## Revendications

1. Turbine à vapeur comportant au moins un arbre (3) qui est monté au moins sur une partie de sa longueur dans un corps (4) et qui traverse le corps du côté (10) de haute pression du corps (4) ou du côté (12) de l'échappement qui y fait face, et comportant au moins une soupape (30) de réglage du courant de vapeur entrant dans le corps (4), caractérisé par un supportage, sans huile, de l'arbre (3), au moyen de paliers magnétiques montés à l'intérieur du corps (4), du côté (10) de haute pression et du côté (12) de l'échappement, ainsi que par un fonctionnement, sans huile, d'au moins une des soupapes (30) de réglage, au moyen d'au moins un servomoteur (28) électromagnétique.

2. Turbine à vapeur suivant la revendication 1, caractérisé en ce que le palier magnétique prévu du côté (10) de haute pression comporte un palier (6) radial et un palier (14) axial.

3. Turbine à vapeur suivant la revendication 2, caractérisé en ce qu'il est prévu, outre le palier (6) radial et le palier (14) axial, un palier (16) d'arrêt monté de préférence entre ces deux là.

4. Turbine à vapeur suivant une des revendications 1 à 3, caractérisé en ce que le côté (10) de haute pression ou le côté (12) de l'échappement est fermé de manière étanche à la vapeur par un couvercle (23).

5. Turbine à vapeur suivant une des revendications 1 à 4, caractérisé en ce qu'il est prévu du côté (10) de haute pression du corps (4) un dispositif (22) d'étanchéité, le palier magnétique radial - et axial - étant monté en amont de ce dispositif (22) d'étanchéité, vu depuis le côté (12) de l'échappement.

6. Turbine à vapeur suivant une des revendications 1 à 5, caractérisé en ce qu'il est prévu du côté (12) de l'échappement, à l'intérieur du corps (4) un autre palier (18) d'arrêt , un autre dispositif (24) d'étanchéité étant prévu du côté (12) de l'échappement, en amont du palier (8) magnétique et du palier (18) d'arrêt dans le sens de passage de la vapeur, ou entre ces deux paliers, de préférence en leur aval.

7. Turbine à vapeur suivant une des revendications 1 à 6, caractérisé en ce que le servomoteur (28) électromagnétique est monté également à l'intérieur du corps (4).

8. Turbine à vapeur suivant une des revendications 1 à 7, caractérisé en ce que le servomoteur (28) électromagnétique comporte une culasse (32) en fer et une bobine (34), ainsi qu'une armature (38) magnétique reliée à une bielle (36).
